(19) **Europäisches Patentamt / European Patent Office / Office européen des brevets**

(11) **EP 4 053 753 B1**

(12) **EUROPEAN PATENT SPECIFICATION**

(45) Date of publication and mention
of the grant of the patent:
**15.07.2026 Bulletin 2026/29**

(21) Application number: **20883356.6**

(22) Date of filing: **08.09.2020**

(51) International Patent Classification (IPC):
**G06N 3/063** *(2023.01)* **G06F 17/15** *(2006.01)*
**G06N 3/045** *(2023.01)* **G06N 3/0464** *(2023.01)*

(52) Cooperative Patent Classification (CPC):
**G06N 3/063; G06F 17/153; G06N 3/045;
G06N 3/0464**

(86) International application number:
**PCT/CN2020/114048**

(87) International publication number:
**WO 2021/082746 (06.05.2021 Gazette 2021/18)**

(54) **OPERATION APPARATUS AND RELATED PRODUCT**

BETRIEBSVORRICHTUNG UND ZUGEHÖRIGES PRODUKT

APPAREIL D'EXPLOITATION ET PRODUIT ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2019 CN 201911060225**

(43) Date of publication of application:
**07.09.2022 Bulletin 2022/36**

(73) Proprietor: **Cambricon Technologies Corporation
Limited
Beijing 100191 (CN)**

(72) Inventors:
• **ZHANG, Yingnan
Beijing 100191 (CN)**
• **JIANG, Guang
Beijing 100191 (CN)**

• **LIU, Shaoli
Beijing 100191 (CN)**
• **GAO, Yufeng
Beijing 100191 (CN)**
• **YU, Yong
Beijing 100191 (CN)**
• **ZHOU, Xuda
Beijing 100191 (CN)**

(74) Representative: **Huang, Liwei
Cäcilienstraße 12
40597 Düsseldorf (DE)**

(56) References cited:
**WO-A1-2018/126073 CN-A- 101 763 338
CN-A- 106 021 182 CN-A- 109 325 591
CN-A- 109 447 241 US-A1- 2008 239 939
US-A1- 2019 042 923 US-A1- 2019 179 869
US-A1- 2020 134 400**

**Description**

**CROSS-REFERNECE TO RELATED APPLICATION**

**TECHNICAL FIELD**

The present disclosure relates to the technical field of data processing, and specifically to a computing device and related products.

**BACKGROUND**

In the field of artificial intelligence technology, neural network algorithms, which are very popular machine learning algorithms recently, have achieved good results in various fields such as image recognition, speech recognition, natural language processing. With the development of neural network algorithm, the complexity of the algorithm is also increasing, and the scale of models is gradually increasing in order to improve the recognition. Processing these large-scale models with GPUs and CPUs takes a lot of computation time and consumes a lot of power.

**SUMMARY**

Based on the situation above, in order to solve the technical problems, the present disclosure provides a computing device and related products that can reduce calculation amount, save calculation time, and save energy.
The invention is defined by the appended independent claims.
A first aspect of the present disclosure provides a computing device including a main instruction processing unit, a main memory unit, and a main functional unit.
The main instruction processing unit is configured to, after receiving an input instruction, send a first control signal to the main memory unit and the main functional unit according to the input instruction.
The main memory unit is configured to send input data to the main functional unit according to the first control signal, where the input data is represented in the form of a tensor.
The main functional unit is configured to decompose a winograd forward transformation of the input data into a summation operation according to the first control signal, and perform calculation to obtain a winograd forward transformation result of the input data.
A second aspect of the present disclosure provides a computing device. The computing device includes a main instruction processing unit, a main functional unit, a secondary instruction processing unit, a secondary memory unit, and a secondary functional unit.
The secondary instruction processing unit is configured to receive a second control signal sent by the main instruction processing unit, and send the second control signal to the secondary functional unit and the secondary memory unit.
The secondary memory unit is configured to send a winograd forward transformation result of a weight to the secondary functional unit according to the second control signal.
The secondary functional unit is configured to receive the winograd forward transformation result of the input data sent by main functional unit. The winograd forward transformation result of the input data includes a winograd forward transformation result of an input neuron.
The functional unit is configured to perform element-wise multiplication on the winograd forward transformation result of the input neuron and the winograd forward transformation result of the weight to obtain an element-wise multiplication result according to the second control signal. The functional unit is further configured to decompose a winograd backward transformation of the element-wise multiplication result into a summation operation according to the second control signal, and perform calculation to obtain the winograd convolution result of the input data.
A third aspect of the present disclosure provides an artificial intelligence chip including the above-mentioned computing device.
A fourth aspect of the present disclosure provides an electronic device including the above-mentioned artificial intelligence chip.
According to the computing device of the present disclosure, computing time and energy consumption can be reduced by decomposing the winograd forward transformation of the input data into the summation operation, performing calculation to obtain the winograd forward transformation result of the input data, and decomposing a multiplication operation into a summation operation.
According to the following detailed description of exemplary embodiments with reference to the accompanying drawings, other features and aspects of the present disclosure will become clear.

# EP 4 053 753 B1

## BRIEF DESCRIPTION OF THE DRAWINGS

The drawings are included in the specification and constitute a part of the specification. Together with the specification, the drawings illustrate exemplary embodiments, features, and aspects of the present disclosure, and are used to explain the principles of the present disclosure.

FIG. 1 is a block diagram of a computing device according to an embodiment of the present disclosure.

FIG. 2 is a flow chart of obtaining a winograd forward transformation result of input data based on the computation of a first sub-tensor according to an embodiment of the present disclosure.

FIG. 3 is a block diagram of a computing device according to another embodiment of the present disclosure.

FIG. 4 is a flow chart of performing a winograd backward transformation on an element-wise multiplication result according to an embodiment of the present disclosure.

FIG. 5 is a schematic diagram of a processor according to an embodiment of the present disclosure.

FIG. 6 is a block diagram of a board card according to an embodiment of the present disclosure.

## DETAILED DESCRIPTION

Technical solutions in embodiments of the present disclosure will be described clearly and completely hereinafter with reference to the drawings in the embodiments of the present disclosure. The embodiments to be described are merely some of, but not all of embodiments of the present disclosure. All other embodiments derived by those of ordinary skill in the art based on the embodiments of the present disclosure without creative efforts shall fall within the protection scope of the present disclosure.

It should be understood that terms such as "first" and "second" in the claims, the specification, and the drawings are used for distinguishing different objects rather than describing a specific order. It should be understood that the terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely for the purpose of describing particular embodiments rather than limiting the present disclosure. As being used in the specification and the claims of the disclosure, unless the context clearly indicates otherwise, the singular forms "a", "an" and "the" are intended to include the plural forms. It should also be understood that the term "and/or" used in the specification and the claims refers to any and all possible combinations of one or more of relevant listed items and includes these combinations.

As being used in this specification and the claims, the term "if" can be interpreted as "when", or "once" or "in response to a determination" or "in response to a case where something is detected" depending on the context. Similarly, depending on the context, the clause "if it is determined that" or "if [a described condition or event] is detected" can be interpreted as "once it is determined that", or "in response to a determination", or "once [a described condition or event] is detected", or "in response to a case where [a described condition or event] is detected".

Winograd convolution is a convolution acceleration implementation based on the polynomial interpolation algorithm. It divides two inputs of the convolution operation: neurons and weights to a certain scale, performs the linear transformation (winograd forward transformation) on the divided inputs, and then performs the element-wise multiplication on the transformed neurons and weights, and finally performs a linear transformation (winograd backward transformation) on the element-wise multiplication result again to obtain a convolution result equivalent to the original convolution operation..

The expressions for the winograd transformation are as follows:

For one-dimensional neurons and weights: $S = A^T((Gg) \odot (B^T d))$.

For two-dimensional neurons and weights: $S = A^T((GgG^T) \odot (B^T dB))A$.

In the above expressions, g is a weight, G is a left-multiplied forward transformation matrix corresponding to the weight, $G^T$ is a right-multiplied forward transformation matrix corresponding to the weight, d is an input neuron, B is a right-multiplied forward transformation matrix corresponding to the input neuron, $B^T$ is a left-multiplied forward transformation matrix corresponding to the input neuron, $\odot$ is an element-wise multiplication, A is a right-multiplied backward transformation matrix, and $A^T$ is a left-multiplied backward transformation matrix. For input neurons of different dimensions, there are corresponding B and $B^T$; similarly, for weights of different dimensions, there are corresponding G and $G^T$.

Replacing an original convolution operation with the winograd convolution can bring greater benefits in hardware energy efficiency ratio and operation time, and can also achieve higher neural network performance without increasing or increasing less hardware overhead. However, the disadvantages of the winograd convolution are still obvious, and a large number of multiplication operations still consume a long operation time in the calculation process.

In order to solve the above technical problems, the present disclosure provides a computing device, which can decompose a multiplication operation in a winograd convolution process into a summation operation, thereby saving computing time and reducing energy consumption.

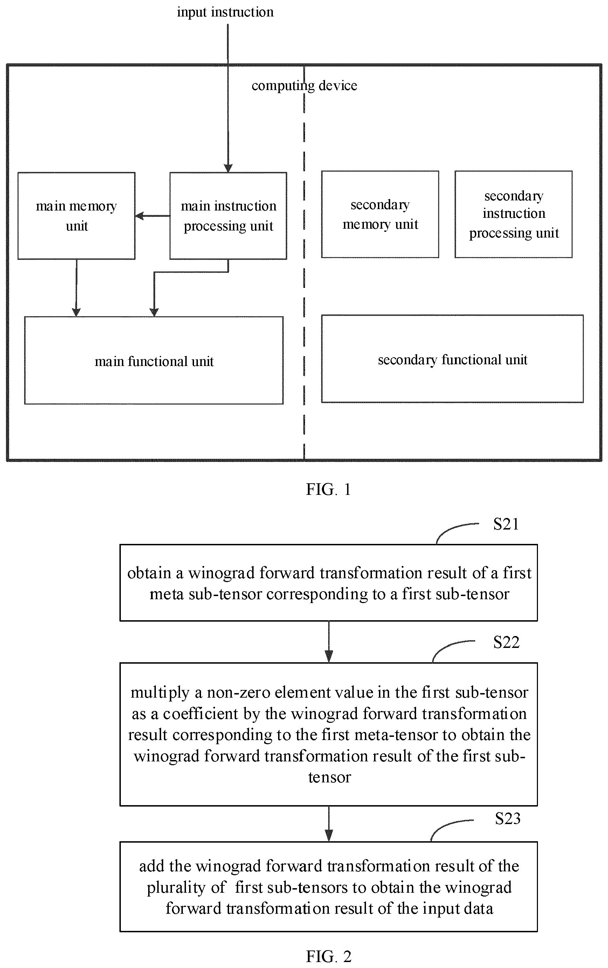

FIG. 1 is a block diagram of a computing device according to an embodiment of the present disclosure. As shown in FIG. 1, the computing device of the present disclosure may include a main instruction processing unit, a main functional unit, and a main memory unit; and the computing device may further include a secondary instruction processing unit, a secondary functional unit, and a secondary memory unit.

The main instruction processing unit is configured to, after receiving an input instruction, send a first control signal to the main memory unit and the main functional unit according to the input instruction. The main memory unit is configured to send input data to the main functional unit according to the first control signal, where the input data is represented in the form of a tensor.

The main functional unit is configured to decompose a winograd forward transformation of the input data into a summation operation according to the first control signal, and perform calculation to obtain a winograd forward transformation result of the input data.

According to the computing device of the present disclosure, computing time and energy consumption can be reduced by decomposing the winograd forward transformation of the input data into the summation operation, performing calculation to obtain the winograd forward transformation result of the input data, and decomposing the multiplication operation into the summation operation.

The above-mentioned input instruction may refer to two instructions: "WINO_TF" and "WINO_MIT", where WINO_TF may refer to an instruction to perform the winograd forward transformation, and WINO_MIT may refer to an instruction to perform the element-wise multiplication and the winograd backward transformation. The input instruction may carry an operation corresponding to the input instruction and information of an operand, and the information of the operand may include: address information of the operand, a size of the operand, etc. For example, WINO_TF can include the address information of the input neuron and the address information to be stored in the obtained output operand (the input operand of the next layer, or the input neuron of the next layer). WINO MIT may include the address information of the weight of WINO_TF, the information of the output result, the element-wise multiplication operation, the backward winograd transformation, and other processing.

For any layer in a neural network, input data of this layer can include an input neuron, and the input neuron of this layer can be an output result of a previous layer. For a first layer in the neural network, the input neuron can be initial input data. The initial input data may be image data, sound data, or video data, and other data. Taking the input data as image data as an example, the input data can be represented in the form of NHWC (batch, height, width, channels), where N represents the number of images, HW represents the number of pixels in the height and width directions of the image, C represents the number of channels, for example, C can represent three channels of RGB (Red, Green, Blue). It should be noted that the above representation is only an example of the present disclosure, and the present disclosure is not limited thereto.

After receiving the input instruction, the main instruction processing unit may decode and parse the input instruction to obtain the operation, the address information of the operand, etc. Then the main instruction processing unit may send a first control signal to the main memory unit and the main functional unit according to the information obtained from the parsing.

After receiving the first control signal, the main memory unit can obtain the input data according to the first control signal. The input data may include an input neuron, and the input data can be data represented in the form of tensor. After receiving the input dada, the main memory unit can send the input data to the main functional unit.

After receiving the first control signal and the input data, the main functional unit can perform calculation according to the operation of the first control signal and the input data, decompose the winograd forward transformation of the input data into a summation operation, and perform calculation to obtain the winograd forward transformation result of the input data.

The specific process can be: the main functional unit decomposes the input date into a plurality of first sub-tensors according to the first control signal, performs the winograd forward transformation on the plurality of first sub-tensors, and sums winograd forward transformation results of the plurality of first sub-tensors to obtain the winograd forward transformation result of the input data.

In a possible embodiment, a count of the plurality of first sub-tensors is the same as a count of the input data. One element of each of the plurality of first sub-tensors is the same as an element at the corresponding position in the input data, and other elements are 0.

Or, in another possible embodiment, a count of the plurality of first sub-tensors is the same as a count of non-zero elements in the input data. One element of each of the plurality of first sub-tensors is the same as an element at the corresponding position in the input data, and other elements are 0.

For example, it is supposed that the input neuron is represented as:

$$d4{\times}4= \begin{bmatrix} d_{00} & d_{01} & d_{02} & d_{03} \\ d_{10} & d_{11} & d_{12} & d_{13} \\ d_{20} & d_{21} & d_{22} & d_{23} \\ d_{30} & d_{31} & d_{32} & d_{33} \end{bmatrix},$$

the input neuron is a $4{\times}4$ matrix, and includes 16 elements. Therefore, the input data can be split into 16 first sub-tensors.

Then, according to the split method of the present disclosure, the 16 first sub-tensors are respectively:

$$d00= \begin{bmatrix} d_{00} & 0 & 0 & 0 \\ 0 & 0 & 0 & 0 \\ 0 & 0 & 0 & 0 \\ 0 & 0 & 0 & 0 \end{bmatrix}, \quad d01= \begin{bmatrix} 0 & d_{01} & 0 & 0 \\ 0 & 0 & 0 & 0 \\ 0 & 0 & 0 & 0 \\ 0 & 0 & 0 & 0 \end{bmatrix}, \quad d02= \begin{bmatrix} 0 & 0 & d_{02} & 0 \\ 0 & 0 & 0 & 0 \\ 0 & 0 & 0 & 0 \\ 0 & 0 & 0 & 0 \end{bmatrix}, \quad d03= \begin{bmatrix} 0 & 0 & 0 & d_{03} \\ 0 & 0 & 0 & 0 \\ 0 & 0 & 0 & 0 \\ 0 & 0 & 0 & 0 \end{bmatrix} \dots\dots,$$

$$d33= \begin{bmatrix} 0 & 0 & 0 & 0 \\ 0 & 0 & 0 & 0 \\ 0 & 0 & 0 & 0 \\ 0 & 0 & 0 & d_{33} \end{bmatrix}.$$

The one element in each of the plurality of first sub-tensors being the same as the element at the corresponding position in the input data and other elements being 0 means that: taking the first sub-tensor d00 as an example, the element in the first row and the first column is the same as the element in the first row and the first column of the input neuron, other elements are 0, and other first sub-tensors also have same property.

It should be noted that the above splitting methods are only some examples of the present disclosure, but do not limit the present disclosure in any way. For example, if the input data has an element with a value of 0, the count of the first sub-tensors obtained by splitting is less than the count of elements of the input data. For example, the count of the plurality of first sub-tensors is the same as the count of non-zero elements in the input data.

FIG. 2 is a flow chart of obtaining a winograd forward transformation result of input data based on the computation of a first sub-tensor according to an embodiment of the present disclosure.

As shown in FIG. 2, in a possible embodiment, performing the winograd forward transformation on the plurality of first sub-tensors and summing winograd forward transformation results of the plurality of first sub-tensors to obtain a winograd forward transformation result of the input data may include:

a step S21, obtaining a winograd forward transformation result of a first meta-tensor corresponding to a first sub-tensor, where for the first meta-tensor corresponding to the first sub-tensor, the value of the element at a first position in the first meta-tensor is 1, the first position of the first meta-tensor is the same as the position of the non-zero elements in the first sub-tensor;

a step S22, multiplying a non-zero element value in the first sub-tensor as a coefficient by the winograd forward transformation result corresponding to the first meta-tensor to obtain the winograd forward transformation result of the first sub-tensor; and

a step S23, adding the winograd forward transformation result of the plurality of first sub-tensors to obtain the winograd forward transformation result of the input data.

For the step S21, taking the first sub-tensor d00 as an example, the first meta-tensor corresponding to d00 may

be: $\begin{bmatrix} 1 & 0 & 0 & 0 \\ 0 & 0 & 0 & 0 \\ 0 & 0 & 0 & 0 \\ 0 & 0 & 0 & 0 \end{bmatrix}$ . In other words, the first meta-tensor is to extract the non-zero element value in the first sub-tensor, and the non-zero element value can be used as the coefficient of the first meta-tensor.

The winograd forward transformation result of the first meta-tensor corresponding to the first sub-tensor may be obtained in advance through the following process: for each of the first sub-tensor, multiplying the left side of the first meta-tensor corresponding to the first sub-tensor by a forward transformation left-multiply matrix, and multiplying the right side by a forward transformation right-multiply matrix to obtain a winograd forward transformation result of the first meta-tensor.

For matrices of different sizes, the form of the first meta-tensor is certain, and the forward transformation left-multiply matrix and the forward transformation right-multiply matrix also are certain.

Therefore, the winograd forward transformation result of the first meta-tensor may be calculated in advance, the specific process is as described above. For example, taking the d00 as an example, the winograd forward transformation result of the first meta-tensor is:

$$\begin{bmatrix} 1 & 0 & -1 & 0 \\ 0 & 1 & 1 & 0 \\ 0 & -1 & 1 & 0 \\ 0 & 1 & 0 & -1 \end{bmatrix} \begin{bmatrix} 1 & 0 & 0 & 0 \\ 0 & 0 & 0 & 0 \\ 0 & 0 & 0 & 0 \\ 0 & 0 & 0 & 0 \end{bmatrix} \begin{bmatrix} 1 & 0 & 0 & 0 \\ 0 & 1 & -1 & 1 \\ -1 & 1 & 1 & 0 \\ 0 & 0 & 0 & -1 \end{bmatrix} = \begin{bmatrix} 1 & 0 & 0 & 0 \\ 0 & 0 & 0 & 0 \\ 0 & 0 & 0 & 0 \\ 0 & 0 & 0 & 0 \end{bmatrix}.$$

For another example, taking the d01 as an example, the winograd forward transformation result of the first meta-tensor is:

$$\begin{bmatrix} 1 & 0 & -1 & 0 \\ 0 & 1 & 1 & 0 \\ 0 & -1 & 1 & 0 \\ 0 & 1 & 0 & -1 \end{bmatrix} \begin{bmatrix} 0 & 1 & 0 & 0 \\ 0 & 0 & 0 & 0 \\ 0 & 0 & 0 & 0 \\ 0 & 0 & 0 & 0 \end{bmatrix} \begin{bmatrix} 1 & 0 & 0 & 0 \\ 0 & 1 & -1 & 1 \\ -1 & 1 & 1 & 0 \\ 0 & 0 & 0 & -1 \end{bmatrix} = \begin{bmatrix} 0 & 1 & -1 & 1 \\ 0 & 0 & 0 & 0 \\ 0 & 0 & 0 & 0 \\ 0 & 0 & 0 & 0 \end{bmatrix}.$$

Since all the element values of the forward transformation left-multiply matrix and the forward transformation right-multiply matrix are 0 or $\pm 1$, the element value of the first meta-tensor is 0 or 1, the element value of the winograd forward transformation result of the first meta-tensor is also 0 or $\pm 1$. Therefore, the matrix multiplication operation can be split into a summation operation.

The process of calculating the winograd forward transformation result of the first meta-tensor involves many multiplication operations. By the method of the present disclosure, pre-computed winograd forward transformation results of first meta-tensors of various scales may be stored in the computing device. In this way, in the actual calculating process, the winograd forward transformation results of the first meta-tensors of various scales can be obtained directly without repeated computing, thereby shortening computing time and saving computing resources.

After obtaining the winograd forward transformation result of the first meta-tensor corresponding to the first sub-tensor, the non-zero element value in the first sub-tensor may be multiplied by the winograd forward transformation result corresponding to the first meta-tensor to obtain the winograd forward transformation result of the first sub-tensor. For example, taking the d00 as an example, the winograd forward transformation result is: $d_{00} \begin{bmatrix} 1 & 0 & 0 & 0 \\ 0 & 0 & 0 & 0 \\ 0 & 0 & 0 & 0 \\ 0 & 0 & 0 & 0 \end{bmatrix}$.

For another example, taking the d01 as an example, the winograd forward transformation result is:

$$d_{01} \begin{bmatrix} 0 & 1 & -1 & 1 \\ 0 & 0 & 0 & 0 \\ 0 & 0 & 0 & 0 \\ 0 & 0 & 0 & 0 \end{bmatrix}.$$

The winograd forward transformation results of all the first sub-tensors are calculated through the above process, and the winograd forward transformation results of the plurality of first sub-tensors are added to obtain the winograd forward transformation result of the input data.

$$B^T d_{4 \times 4} B = d_{00} \begin{bmatrix} 1 & 0 & 0 & 0 \\ 0 & 0 & 0 & 0 \\ 0 & 0 & 0 & 0 \\ 0 & 0 & 0 & 0 \end{bmatrix} + d_{01} \begin{bmatrix} 0 & 1 & -1 & 1 \\ 0 & 0 & 0 & 0 \\ 0 & 0 & 0 & 0 \\ 0 & 0 & 0 & 0 \end{bmatrix} + \dots +$$

$$d_{33} \begin{bmatrix} 0 & 0 & 0 & 0 \\ 0 & 0 & 0 & 0 \\ 0 & 0 & 0 & 0 \\ 0 & 0 & 0 & 1 \end{bmatrix} \qquad (1)$$

$$G_{4\times3}g_{3\times3}G^T_{3\times4} = g_{00}\begin{bmatrix}1&1&1&0\\1&1&1&0\\1&1&1&0\\0&0&0&0\end{bmatrix} + g_{01}\begin{bmatrix}0&1&-1&0\\0&1&-1&0\\0&1&-1&0\\0&0&0&0\end{bmatrix} + ... + g_{22}\begin{bmatrix}0&0&0&0\\0&1&1&1\\0&1&1&1\\0&1&1&1\end{bmatrix} \quad (2)$$

Since the elements among the winograd forward transformation result of the converted first meta-tensor are also 0 and $\pm1$, the right sides of the above equations (1) and (2) only involve summation operations.

According to the above-mentioned embodiments of the present disclosure, a plurality of first sub-tensors are obtained by decomposing the input data. According to the winograd forward transformation result of the first meta-tensor corresponding to the first sub-tensor may be calculated in advance and the non-zero element value of the first sub-tensor, the summation operation can be performed to obtain the winograd forward transformation result of the input data. According to the computing device of the present disclosure, decomposing the multiplication operation into a summation operation can save computing time and reduce energy consumption.

In a possible embodiment, the main functional unit includes a caching unit, and the main functional unit stores the winograd forward transformation result of the input data into the caching unit.

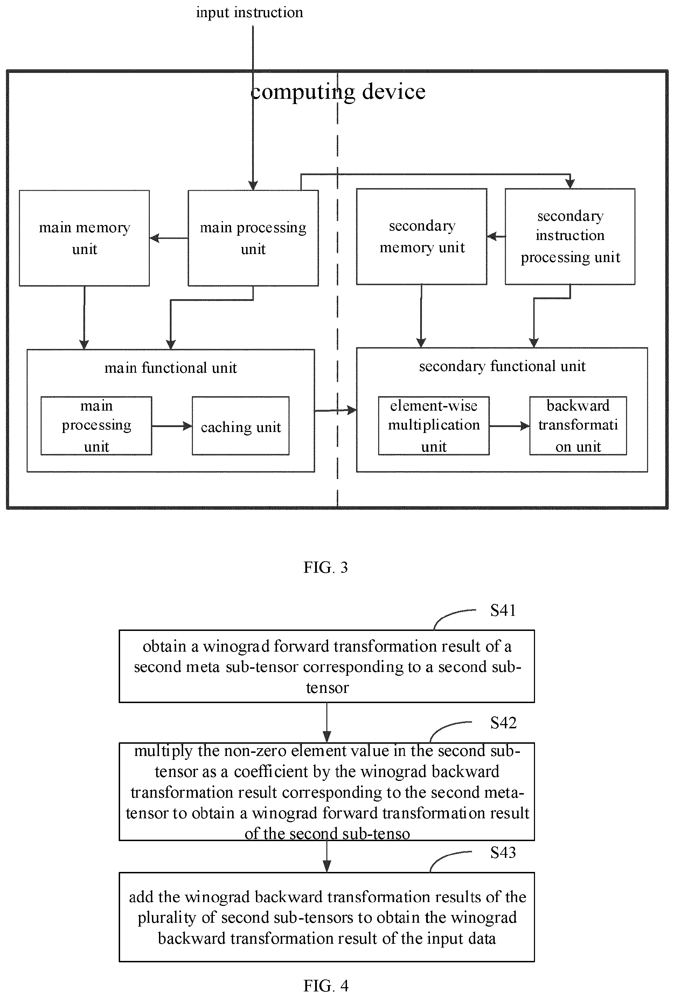

FIG. 3 is a block diagram of a computing device according to another embodiment of the present disclosure. As shown in FIG. 3, the main functional unit may include a main processing unit and a caching unit. The main processing unit may be configured to execute the main functional units of all the above-mentioned embodiments to decompose a winograd forward transformation of the input data into a summation operation according to the first control signal, and perform calculation to obtain a winograd forward transformation result of the input data. The main functional unit may store the winograd forward transformation result of the input data into the caching unit, and the caching unit may send the winograd forward transformation result of the input data to a secondary functional unit. Therefore, it is convenient for the secondary functional unit of the computing device to perform the element-wise multiplication on the winograd forward transformation result and perform the winograd backward transformation.

As shown in FIG. 3, a main instruction processing unit is configured to send a second control signal to a secondary instruction processing unit. For example, after the winograd forward transformation is completed and the winograd forward transformation result of the input date is ready, the main instruction processing unit may send the second control signal to the secondary instruction processing unit according to the WINO_MIT instruction. The main functional unit is further configured to send the winograd forward transformation result of the input data to the secondary functional unit. The second control signal may be used to instruct the secondary instruction processing unit to control the secondary functional unit to further process the winograd forward transformation result of the input data.

Specifically, the secondary instruction processing unit is configured to receive the second control signal sent by the main instruction processing unit, and send the second control signal to the secondary functional unit and the secondary memory unit. The secondary memory unit is configured to send the winograd forward transformation result of the weight to the secondary functional unit according to the second control signal. The secondary functional unit is configured to receive the winograd forward transformation result of the input data sent by main functional unit. The winograd forward transformation result of the input data includes the winograd forward transformation result of the input neuron.

The functional unit is configured to perform element-wise multiplication on the winograd forward transformation result of the input neuron and the winograd forward transformation result of the weight to obtain the element-wise multiplication result according to the second control signal. The functional unit is further configured to decompose the winograd backward transformation of the element-wise multiplication result into a summation operation according to the second control signal, and perform calculation to obtain a winograd convolution result of the input data. The winograd forward transformation result of the weight may be calculated in advance, and the calculation method of the winograd forward transformation result of the weight may adopt the traditional matrix multiplication operation, or the above-mentioned method of decomposing the winograd backward transformation of the element-wise multiplication result into a summation operation.

For example, the weight is decomposed into a plurality of first sub-tensors, and the winograd forward transformation is performed on the plurality of first sub-tensors, and winograd forward transformation results of the plurality of first sub-tensors summed to obtain the winograd forward transformation result of the weight. It is supposed that the weight can be expressed as: $g=\begin{bmatrix}g_{00}&g_{01}&g_{02}\\g_{10}&g_{11}&g_{12}\\g_{20}&g_{21}&g_{22}\end{bmatrix}$, a matrix with weights of $3\times3$ includes 9 elements, therefore, the input data can be decomposed into 9 first sub-tensors.

Then, according to the decomposing method of the present disclosure, the 9 first sub-tensors are respectively:

$$g00= \begin{bmatrix} g_{00} & 0 & 0 \\ 0 & 0 & 0 \\ 0 & 0 & 0 \end{bmatrix}, \quad g01= \begin{bmatrix} 0 & g_{01} & 0 \\ 0 & 0 & 0 \\ 0 & 0 & 0 \end{bmatrix}, \quad g02= \begin{bmatrix} 0 & 0 & g_{02} \\ 0 & 0 & 0 \\ 0 & 0 & 0 \end{bmatrix} \quad \ldots\ldots \, ,$$

$$g22= \begin{bmatrix} 0 & 0 & 0 \\ 0 & 0 & 0 \\ 0 & 0 & g_{22} \end{bmatrix}.$$

Similarly, one element in each of the plurality of first sub-tensors is the same as an element at the corresponding position in the weight, and other elements are 0.

Referring to the process from step S21 to step S23, the winograd forward transformation result of the weight can be obtained by calculation.

The element-wise multiplication may refer to the data obtained by multiplying the data at the corresponding positions of the two tensors as the value of the corresponding position in the result of the element-wise multiplication.

It is supposed that the winograd forward transformation result of input neuron $B^T d_{4\times4} B$ can be expressed as

$$D_{4\times4}= \begin{bmatrix} D_{00} & D_{01} & D_{02} & D_{03} \\ D_{10} & D_{11} & D_{12} & D_{13} \\ D_{20} & D_{21} & D_{22} & D_{23} \\ D_{30} & D_{31} & D_{32} & D_{33} \end{bmatrix},$$

the winograd forward transformation result of the weight $G_{4\times3} g_{3\times3} G_{3\times4}^T$ can be expressed as

$$G_{4\times4}= \begin{bmatrix} G_{00} & G_{01} & G_{02} & G_{03} \\ G_{10} & G_{11} & G_{12} & G_{13} \\ G_{20} & G_{21} & G_{22} & G_{23} \\ G_{30} & G_{31} & G_{32} & G_{33} \end{bmatrix},$$

then, the element-wise multiplication result can be expressed as

$$G_{4\times4} \odot D_{4\times4} = \begin{bmatrix} D_{00} \times G_{00} & D_{01} \times G_{01} & D_{02} \times G_{02} & D_{03} \times G_{03} \\ D_{10} \times G_{10} & D_{11} \times G_{11} & D_{12} \times G_{12} & D_{13} \times G_{13} \\ D_{20} \times G_{20} & D_{21} \times G_{21} & D_{22} \times G_{22} & D_{23} \times G_{23} \\ D_{30} \times G_{30} & D_{31} \times G_{31} & D_{32} \times G_{32} & D_{33} \times G_{33} \end{bmatrix}.$$

The winograd convolution result of the input data can be expressed as $S_{4\times4} = A^T(G_{4\times4} \odot D_{4\times4})) A$, the secondary function processing unit of the present disclosure may discompose $A^T(G_{4\times4} \odot D_{4\times4}))A$ into a summation operation to obtain the winograd convolution result of input data, which may save computing time and reduce energy consumption.

The specific process is similar to the discomposing method of the winograd forward transformation above. In a possible embodiment, the secondary functional unit is configured to decompose an element-wise multiplication result into a plurality of second sub-tensors, perform the winograd backward transformation on the plurality of the second sub-tensors, and sum winograd forward transformation results of the plurality of second sub-tensors to obtain the winograd convolution result of the input data.

In a possible embodiment, a count of the plurality of second sub-tensors is the same as the count of elements in the result of element-wise multiplication. One element in each of the plurality of second sub-tensors is the same as an element at the corresponding position corresponding to the result of element-wise multiplication, and other elements are 0.

In a possible embodiment, a count of the plurality of second sub-tensors is the same as the count of non-zero elements in the result of element-wise multiplication. One element in each of the plurality of second sub-tensors is the same as an element at the corresponding position corresponding to the result of element-wise multiplication, and other elements are 0.

It is supposed that the element-wise multiplication result can be expressed as:

$$C_{4\times4} = G_{4\times4}\odot D_{4\times4} = \begin{bmatrix} D_{00}\times G_{00} & D_{01}\times G_{01} & D_{02}\times G_{02} & D_{03}\times G_{03} \\ D_{10}\times G_{10} & D_{11}\times G_{11} & D_{12}\times G_{12} & D_{13}\times G_{13} \\ D_{20}\times G_{20} & D_{21}\times G_{21} & D_{22}\times G_{22} & D_{23}\times G_{23} \\ D_{30}\times G_{30} & D_{31}\times G_{31} & D_{32}\times G_{32} & D_{33}\times G_{33} \end{bmatrix} =$$

$$\begin{bmatrix} C_{00} & C_{01} & C_{02} & C_{03} \\ C_{10} & C_{11} & C_{12} & C_{13} \\ C_{20} & C_{21} & C_{22} & C_{23} \\ C_{30} & C_{31} & C_{32} & C_{33} \end{bmatrix},$$

and an element-wise multiplication result is decomposed into a plurality of second sub-tensors, for example, a result of element-wise multiplication result is decomposed into 16 second sub-tensors, the 16 second sub-tensors may be:

$$C00 = \begin{bmatrix} C_{00} & 0 & 0 & 0 \\ 0 & 0 & 0 & 0 \\ 0 & 0 & 0 & 0 \\ 0 & 0 & 0 & 0 \end{bmatrix},\ C01 = \begin{bmatrix} 0 & C_{01} & 0 & 0 \\ 0 & 0 & 0 & 0 \\ 0 & 0 & 0 & 0 \\ 0 & 0 & 0 & 0 \end{bmatrix},\ C02 = \begin{bmatrix} 0 & 0 & C_{02} & 0 \\ 0 & 0 & 0 & 0 \\ 0 & 0 & 0 & 0 \\ 0 & 0 & 0 & 0 \end{bmatrix},\ C03 = \begin{bmatrix} 0 & 0 & 0 & C_{03} \\ 0 & 0 & 0 & 0 \\ 0 & 0 & 0 & 0 \\ 0 & 0 & 0 & 0 \end{bmatrix} \ldots\ldots,$$

$$C33 = \begin{bmatrix} 0 & 0 & 0 & 0 \\ 0 & 0 & 0 & 0 \\ 0 & 0 & 0 & 0 \\ 0 & 0 & 0 & C_{33} \end{bmatrix}.$$

After an element-wise multiplication result is decomposed, the winograd backward transformation is performed on the plurality of second sub-tensors, and a summation tis performed to obtain the winograd convolution result of the input data.

FIG. 4 is a flow chart of performing a winograd backward transformation on an element-wise multiplication result according to an embodiment of the present disclosure. As shown in FIG. 4, In a possible embodiment, performing winograd backward transformation on the plurality of second sub-tensors, and summing winograd forward transformation results of the plurality of second sub-tensors to obtain the winograd convolution result of the input data further includes the following process:

a step S41, obtaining a winograd forward transformation result of a second meta-tensor corresponding to a second sub-tensor, where for the second meta-tensor corresponding to the second sub-tensor, the value of an element at a second position in the second meta-tensor is 1, the seocnd position of the second meta-tensor is the same as the position of the non-zero element in the second sub-tensor;

a step S42, multiplying the non-zero element value in the second sub-tensor as a coefficient by the winograd backward transformation result corresponding to the second meta-tensor to obtain a winograd forward transformation result of the second sub-tensor; and

a step S43, adding the winograd backward transformation results of the plurality of second sub-tensors to obtain the winograd backward transformation result of the input data.

The method of determining the second meta-tensor corresponding to the second sub-tensor is the same as the method of determining the first meta-tensor described above, which will not be repeated here. The winograd backward transformation result of the second meta-tensor corresponding to the second sub-tensor is obtained in advance through the following process: for each of the second sub-tensor, multiplying the left side of the second meta-tensor corresponding to the second sub-tensor by a backward transformation left-multiply matrix, and multiplying the right side by a backward transformation right-multiply matrix to obtain the winograd backward transformation result of the second meta-tensor.

For matrices of different sizes, the form of the second meta-tensor is certain, and the corresponding backward transformation left-multiply matrix and backward transformation right-multiply matrix are also certain. Therefore, the winograd backward transformation result of the second meta-tensor can be calculated in advance, and the specific process is as described above.

For the examples listed above in the present disclosure, the backward transformation left-multiply matrix is a $2\times4$ matrix, for example, the backward transformation left-multiply matrix may be $\begin{bmatrix} 1 & \frac{1}{2} & \frac{1}{2} & 0 \\ 0 & \frac{1}{2} & -\frac{1}{2} & -1 \end{bmatrix}$,

and the backward transformation right-multiply matrix is a $4\times2$ matrix, for example, the backward transformation right-multiply matrix may be $\begin{bmatrix} 1 & 0 \\ \frac{1}{2} & \frac{1}{2} \\ \frac{1}{2} & -\frac{1}{2} \\ 0 & -1 \end{bmatrix}$.

The dimension of the backward transformation matrix may be determined according to the dimension of the input neuron, the dimension of the weight, and the convolution step. The above is just an example, which does not limit the present disclosure in any way.

The backward transformation matrix is composed of 0, $\pm\frac{1}{2}$, $\pm1$, so a matrix multiplication operation of the backward transformation matrix may be decomposed into a summation operation and a shift operation. The winograd backward transformation result of the second meta-tensor may be obtained by multiplying the backward transformation matrix by the second meta-tensor. The element values among the winograd backward transformation result of the second meta-tensor are composed of $0, \pm\frac{1}{4}, \pm\frac{1}{2}, \pm1$, etc. The fraction can be calculated by a simple shift operation, which can still save calculation time compared with the multiplication operation.

The specific process of the step S42 may refer to the step S22 and the step S23 above, except that the winograd backward transformation result of the second meta-tensor is not completely $0, \pm1$, and the fraction can be calculated by a simple shift operation. The present disclosure can still save calculation time compared with the multiplication operation after decomposing the backward transformation result.

According to the above-mentioned embodiments of the present disclosure, a plurality of second sub-tensors are obtained by decomposing the element-wise multiplication result, and the result of the backward winograd transformation of the second meta-tensor corresponding to the second sub-tensor obtained in advance and the non-zero element value of the second sub-tensor can be summed to obtain the winograd convolution result of the input data. According to the above computing device of the present disclosure, decomposing the multiplication operation into a summation operation can save computing time and reduce energy consumption.

In a possible embodiment, as shown in FIG.3, the secondary functional unit may include an element-wise multiplication unit and a backward transformation unit. The element-wise multiplication unit may be configured to execute the above-mentioned element-wise multiplication operation to obtain the element-wise multiplication result, and send the element-wise multiplication result to the backward transformation unit. The above-mentioned winograd backward transformation of the element-wise multiplication result is decomposed into the summation operation by the backward transformation unit, and the winograd convolution result of the input data is obtained by calculation.

In a possible embodiment, the secondary functional unit is further configured to perform post-processing on the winograd convolution result of the input data, and the post-processing includes a bitwise rounding operation and a conversion operation.

The rounding operation may refer to rounding the winograd convolution result of the input data according to the set number of bits for rounding. The conversion operation may refer to processing the arrangement of the winograd convolution result of the input data. For example, the arrangement of the winograd convolution result of the input data may be changed according to storage requirements. The post-processing of the winograd convolution result of the input data is more conducive to subsequent operations and calculations.

In a possible embodiment, the secondary functional unit is further configured to send the winograd convolution result of the input data to the main memory unit as the input data of a next convolution calculation.

The neural network quantization method provided in the embodiments of the present disclosure may be applied to a processor. The processor may be a CPU (central processing unit) or an artificial IPU (intelligence processing unit) for performing artificial intelligence operations. The artificial intelligence operations may include machine learning operations, brain-like operations, and the like. The machine learning operations may include neural network operations, k-means operations, support vector machine operations, and the like. The artificial intelligence processing unit may include one or more of, for example, a GPU (graphics processing unit), an NPU (neural-network processing unit), a DSP (digital signal process) unit, and an FPGA (field-programmable gate array) chip. The present disclosure does not limit the specific types of the processors.

In a possible embodiment, the processors mentioned in the present disclosure may include a plurality of processing units, and each processing unit may independently execute various assigned tasks, such as a convolution operation task, a pooling task, or a fully connection task. The present disclosure does not limit the processing unit and the tasks executed by the processing unit.

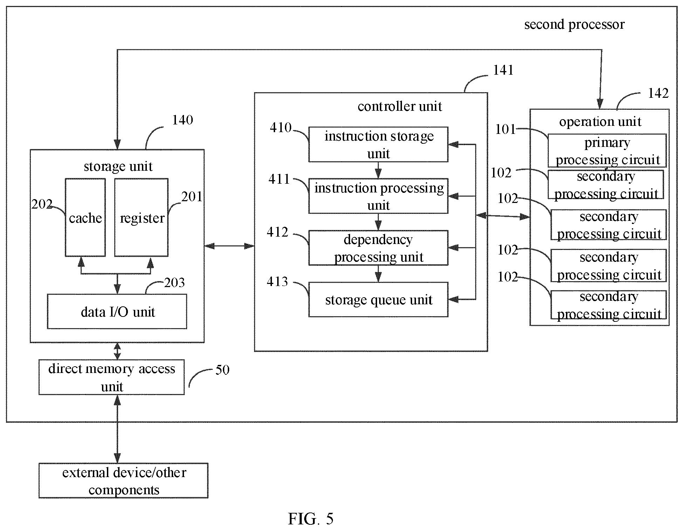

FIG. 5 is a schematic diagram of a processor according to an embodiment of the present disclosure. As shown in

**EP 4 053 753 B1**

FIG.5, the processor is configured to execute the artificial intelligence operations, the processor includes a controller unit 141 and an operation unit 142. The controller unit 141 connects with the operation unit 142. The operation unit 142 includes a primary processing circuit and a plurality of secondary processing units.

The controller unit 141 is configured to obtain input data and a calculation instruction. The calculation instruction obtained by the controller unit 141 may be one or more operators in a first fusion set after the operators are fused by a first processor.

In a possible embodiment, the primary processing circuit and the plurality of secondary processing units may have a tree structure, an H-shaped structure, or a pulse array machine structure. However, the present disclosure does not limit the connection manner between the main processing circuit and the secondary processing circuits.

In a possible embodiment, specifically, the input data and calculation instruction may be obtained by a data input/output unit, and the input/output unit may be one or more data I/O interfaces or I/O pins.

The calculation instruction above includes but not limited a forward operation instruction or a backward training instruction, or other neural network operation instructions, , such as a convolution operation instruction or the "WINO_TF and WINO_MIT" instruction above-mentioned. The specific implementation of the present disclosure is not limited a specific form of the operation instruction above-mentioned.

The controller unit 141 is further configured to parse the calculation instruction to obtain a plurality of operation instructions, and send the plurality of operation instructions and the input data to the primary processing circuit.

The primary processing circuit 101 is configured to pre-process the input data, and transfer data and operation instructions to the plurality of secondary processing circuits.

The plurality of secondary processing circuits 102 are configured to perform intermediate operations in parallel according to the data and the operation instructions transferred by the primary processing circuit to obtain a plurality of intermediate results, and transfer the plurality of intermediate results to the primary processing circuit.

The primary processing circuit 101 is further configured to post-process the plurality of intermediate results to obtain a calculation result of the calculation instruction.

The technical solution provided by the present disclosure sets the operation unit having a single-primary-multiple-secondary structure, and for the calculation instruction of the forward operation, the data may be split according to the calculation instruction of the forward operation, so that the plurality of secondary processing circuits can perform parallel operations on parts with a large amount of calculation, thereby increasing the operation speed, saving operation time, and reducing power consumption.

Alternatively, the machine learning operation may include artificial neural network operations. The input data may include input neuron data and weight data. The calculation result may be a result of the artificial neural network operation, which is output neuron data.

The neural network operation may be an operation of a neural network layer. For a multi-layer neural network, an embodiment of the operation may be that, in a forward operation, after the operation of a previous layer of the artificial neural network is completed, an operation instruction of a next layer may take an output neuron calculated by the operation unit as an input neuron for the next layer for operating (or perform some operations on the output neuron and then take it as the input neuron for the next layer). At the same time, a weight is replaced with a weight of the next layer. In a backward operation, after the back operation of a previous layer of the artificial neural network is completed, an operation instruction of a next layer may take an input neuron gradient obtained by an operation unit as an output neuron gradient of the next layer for operating (or perform some operations on the input neuron gradient and then take it as the output neuron gradient of the next layer). At the same time, a weight is replaced with a weight of the next layer.

The machine learning operation above may also include support vector machine operations, k-nearest neighbor (k-nn) operations, k-means operations, principal component analysis operations, and the like. For the convenience of description, an artificial neural network operation is taken as an instance to illustrate a scheme of the machine learning operation.

If artificial neural network operations have operations of multiple layers, input neurons and output neurons of the multi-layer operations do not refer to neurons in an input layer and in an output layer of the entire neural network. For any two adjacent layers in the network, neurons in a lower layer of the network forward operations are the input neurons, and neurons in an upper layer of the network forward operations are the output neurons. Taking a convolutional neural network as an example, it is supposed that the convolutional neural network has L layers, K=1, 2, ......, L-1. For a K layer and a K+1 layer, the K layer is called the input layer, and the neurons in the K layer are the input neurons; and the K+1 layer is called the output layer, and the neurons in the K+1 layer are the output neurons. In other words, except a top layer, each layer may be an input layer, and a lower layer of that layer is a corresponding output layer.

Optionally, the processor above further may include: a storage unit 140 and a direct memory access unit 5. The storage unit 140 may include one or any combination of a register and a cache. Specifically, the cache is configured to store the calculation instruction; the register is configured to store the input data and scalar; and the cache is a temporary cache. The direct memory access unit 50 is configured to read or store data from the storage unit 140.

Optionally, the controller unit includes an instruction storage unit 410, an instruction processing unit 411, and a

11

storage queue unit 413.

The instruction storage unit 410 is configured to store a calculation instruction associated with the artificial neural network operation.

The instruction processing unit 411 is configured to parse the calculation instruction to obtain a plurality of operation instructions.

The storage queue unit 413 is configured to store an instruction queue that includes a plurality of operation instructions or calculation instructions that are to be executed in the sequential order.

For instance, in an optional technical solution, a primary operation processing circuit may include a controller unit, where the controller unit may include a primary instruction processing unit configured to decode an instruction to a micro-instruction. In another optional technical solution, a secondary operation processing circuit may include another controller unit, where the another controller unit includes a secondary instruction processing unit configured to receive and process the micro-instruction. The micro-instruction may be an instruction in a next level of the instruction. The micro-instruction may be obtained by partitioning or decoding the instruction, and may be further decoded into control signals for each component, each unit, or each processing circuit.

As an optional example, the table below shows a structure of the calculation instruction.

| Opcode | Register or Immediate | Register/Immediate | ⋯ |
|---|---|---|---|

The ellipsis in the above table indicates that multiple registers or immediate values can be included.

In another optional technical solution, the calculation instruction may include: one or more operation fields and an opcode. The calculation instruction may include a neural network operation instruction. Taking a neural network operation instruction as an instance, as shown in the table 1, register number 0, register number 1, register number 2, register number 3, and register number 4 may be operation fields. Register number 0, register number 1, register number 2, register number 3, and register number 4 may be the numbers of one or a plurality of registers.

| Opcode | Register number 0 | Register number 1 | Register number 2 | Register number 3 | Register number 4 |
|---|---|---|---|---|---|
| COMPUTE | Input data start address | Input data length | Weight start address | Weight length | Address of an activation function interpolation table |
| IO | External data memory address | Data length | Internal data memory address | | |
| NOP | | | | | |
| JUMP | Destination address | | | | |
| MOVE | Input address | Data size | Output address | | |

The register may be an off-chip memory. In a practice application, the register may also be an on-chip memory for storing data. The data may be n-dimensional data, where n is an integer greater than or equal to 1. For instance, when n=1, the data is one-dimensional data, in other words, the data is a vector; when n=2, the data is two-dimensional data, in other words, the data is a matrix; and when n=3 or above 3, the data is multi-dimensional tensor.

Optionally, the controller unit may further include a dependency processing unit 412.

The dependency processing unit 412 is configured to, when a plurality of operation instructions exist, determine whether a first operation instruction and a zero-th operation instruction preceding the first operation instruction are associated. If the first operation instruction and the zero-th operation instruction are associated, the dependency processing unit 412 is further configured to cache the first operation instruction in the instruction storage unit, and after the zero-th operation instruction is completed, fetch the first operation instruction from the instruction storage unit and transfer the first operation instruction to the operation unit.

Determining whether the first operation instruction and the zero-th operation instruction preceding the first operation instruction are associated may include:

fetching a first storage address range of required data (such as a matrix) of the first operation instruction according to the first operation instruction, and fetching a zero-th storage address range of a required matrix of the zero-th operation instruction according to the zero-th operation instruction; if there is an overlap between the first storage address range and the zero-th storage address range, determining that the first operation instruction and the zero-th operation instruction are associated; if there is no overlap between the first storage address range and the zero-th storage address range, determining that the first operation instruction and the second operation instruction are not associated.

It should be noted that, the foregoing embodiments of method, for the sake of conciseness, are all described as a series of combinations of actions, but those skilled in the art should know that the present disclosure is not limited by the described order of action since the steps may be performed in a different order or simultaneously according to the present disclosure. Secondly, those skilled in the art should also understand that the embodiments described in the specification are all optional, and the actions and units involved are not necessarily required for this disclosure.

Further, it should be explained that though the steps in the flowcharts are shown by following the direction of arrows, these steps may not necessarily be performed according to the order indicated by the arrows. Unless clearly stated herein, the order for performing these steps is not strictly restricted. These steps may be performed in a different order. Additionally, at least part of the steps shown in the flowcharts may include a plurality of sub-steps or a plurality of stages. These sub-steps or stages may not necessarily be performed and completed at the same time, instead, these sub-steps or stages may be performed at different times. These sub-steps or stages may not necessarily be performed sequentially either, instead, these sub-steps or stages may be performed in turn or alternately with at least part of other steps, or sub-steps of other steps, or stages.

It should be understood that the foregoing device embodiments are only illustrative, and the device of the present disclosure may also be implemented in other ways. For example, the division of the units/modules in the foregoing embodiment is only a logical function division, and there may be other division methods in actual implementation. For example, a plurality of units, modules, or components may be combined or integrated into another system, or some features may be omitted or not implemented.

In addition, unless otherwise specified, the functional units/modules in the various embodiments of the present disclosure may be integrated into one unit/module. Alternatively, each unit/module may exist alone physically. Alternatively, two or more units/modules may be integrated together. The above-mentioned integrated units/modules can be implemented in the form of hardware or in the form of software program modules.

When the above-mentioned integrated units/modules are implemented in the form of hardware, the hardware may be a digital circuit, an analog circuit, and the like. Physical implementation of the hardware structure may include, but is not limited to, a transistor, a memristor, and the like. Unless otherwise specified, the artificial intelligence processing unit may be any appropriate hardware processor, such as a CPU, a GPU, an FPGA, a DSP, an ASIC, and the like. Unless otherwise specified, the storage unit may be any suitable magnetic storage medium or magneto-optical storage medium, such as an RRAM (resistive random access memory), a DRAM (dynamic random access memory), an SRAM (static random-access memory), an EDRAM (enhanced dynamic random access memory), an HBM (high-bandwidth memory), an HMC (hybrid memory cube), and the like.

If the integrated units/modules are implemented in the form of software program modules and sold or used as an independent product, the product can be stored in a computer-readable memory. Based on such understanding, the essence of the technical solutions of the present disclosure, or a part of the present disclosure that contributes to the prior art, or all or part of the technical solutions, can be all or partly embodied in the form of a software product that is stored in memory. The software product may include several instructions to enable a computer device (which may be a personal computer, a server, or a network device, etc.) to perform all or part of the steps of the methods described in the examples of the present disclosure. The foregoing memory includes: a USB flash drive, an ROM (read-only memory), an RAM (random access memory), a mobile hard disk, a magnetic disk, or an optical disc, and other media that can store program codes.

A possible embodiment provides an artificial intelligence chip including the above-mentioned computing device.

A possible embodiment provides a board card including a storage component, an interface device, a control component, and the above-mentioned artificial intelligence chip. The artificial intelligence chip is connected to the storage component, the control component, and the interface device, respectively; the storage component is configured to store data; the interface device is configured to implement data transfer between the artificial intelligence chip and an external device; and the control component is configured to monitor the state of the artificial intelligence chip.

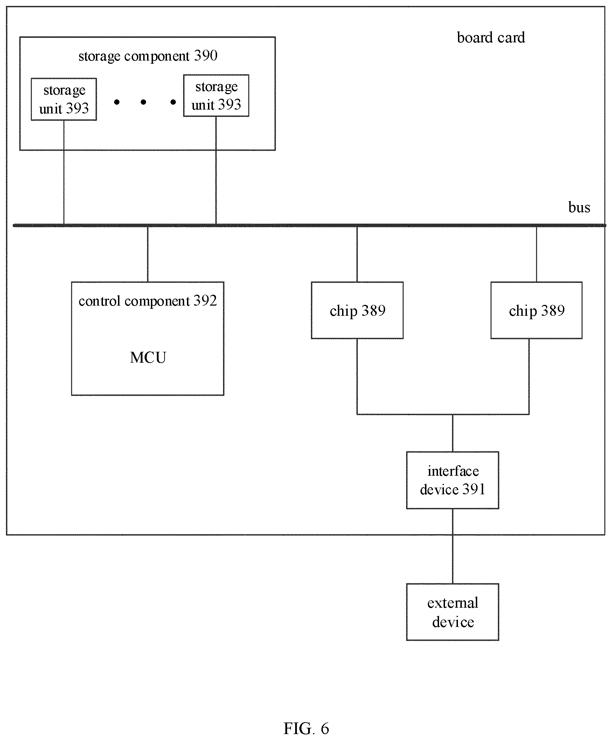

FIG. 6 shows a block diagram of a board card according to an embodiment of the present disclosure. Referring to FIG. 6 in addition to the above-mentioned chip 389, the board card may further include other matching components. The matching components may include, but are not limited to, a storage component 390, an interface device 391, and a control component 392.

The storage component 390 is connected to the artificial intelligence chip through a bus, and is configured to store data. The storage component may include a plurality of groups of storage units 393. Each group of storage units is connected to the artificial intelligence chip through the bus. It can be understood that each group of storage units may be a DDR SDRAM (double data rate synchronous dynamic random access memory).

DDR can double the speed of SDRAM without increasing the clock frequency. DDR allows data to be read on the rising and falling edges of the clock pulse. The speed of DDR is twice the speed of a standard SDRAM. In an embodiment, the memory device may include 4 groups of storage units. Each group of storage units may include a plurality of DDR4 particles (chips). In an embodiment, four 72-bit DDR4 controllers may be arranged inside the artificial intelligence chip, where 64 bits of each 72-bit DDR4 controller are for data transfer and 8 bits are for ECC parity. It can be understood that when each group of storage units adopts DDR4-3200 particles, the theoretical bandwidth of data transfer may reach 25600MB/s.

In an embodiment, each group of storage units may include a plurality of DDR SDRAMs arranged in parallel. DDR can transfer data twice per clock cycle. A DDR controller may be arranged inside the chip for controlling the data transfer and data storage of each storage unit.

The interface device may be electrically connected to the artificial intelligence chip. The interface device is configured to realize data transfer between the artificial intelligence chip and the external device (such as a server or a computer). In an embodiment, the interface device may be a standard PCIe interface. For instance, data to be processed may be transferred by a server through the standard PCIE interface to the chip, thereby realizing data transfer. Optionally, when a PCIe 3.0 X 16 interface is adopted for transferring data, the theoretical bandwidth may reach 16000MB/s. In another embodiment, the interface device may also be another interface. The present disclosure does not restrict the other interface to a specific form as long as the interface unit can realize the transferring function. In addition, a computation result from the artificial intelligence chip may still be transferred by the interface device to the external device (such as a server).

The control component is electrically connected to the artificial intelligence chip. The control component is configured to monitor the state of the artificial intelligence chip. Specifically, the artificial intelligence chip and the control component can be electrically connected through an SPI interface. The control component may include an MCU (micro controller unit). If the artificial intelligence chip includes a plurality of processing chips, a plurality of processing cores, or a plurality of processing circuits, the chip is capable of driving a plurality of loads. In this case, the artificial intelligence chip can be in different working state such as multi-load state and light-load state. The working state of a plurality of processing chips, a plurality of processing cores, and/or a plurality of processing circuits can be regulated and controlled by the control device.

In a possible embodiment, an electronic device is provided. The electronic device includes the artificial intelligence chip. The electronic device includes a data processing device, a robot, a computer, a printer, a scanner, a tablet, a smart terminal, a mobile phone, a traffic recorder, a navigator, a sensor, a webcam, a server, a cloud-based server, a camera, a video camera, a projector, a watch, a headphone, a mobile storage device, a wearable device, a vehicle, a household appliance, and/or a medical device. Vehicles include an airplane, a ship, and/or a car. Household electrical appliances may include a television, an air conditioner, a microwave oven, a refrigerator, an electric rice cooker, a humidifier, a washing machine, an electric lamp, a gas cooker, and a range hood. Medical equipment may include a nuclear magnetic resonance spectrometer, a B-ultrasonic scanner, and/or an electrocardiograph.

An aspect of the present disclosure provides a computer readable storage medium where computer program instructions are stored. When the computer program instructions are executed by a processor, the above method is realized. The computer readable storage medium may be a non-volatile computer-readable storage medium,

An aspect of the present disclosure provides an electronic device, the electronic device includes a processor and a memory for storing processor executable instructions. The processor is configured to invoke the instructions stored in the memory to execute the above-mentioned method.

In the embodiments above, the description of each embodiment has its own emphasis. For a part that is not described in detail in one embodiment, reference may be made to related descriptions in other embodiments. Each technical feature of the embodiments above can be randomly combined. For conciseness, not all possible combinations of the technical features of the embodiments above are described. Yet, provided that there is no contradiction, combinations of these technical features fall within the scope of the description of the present specification.

The embodiments of the present disclosure have been described in detail above. Specific examples have been used in the specification to explain the principles and implementations of the present disclosure. The descriptions of the above embodiments are only used to facilitate understanding of the methods and core ideas of the present disclosure. Persons of ordinary skill in the art may change or transform the implementation and application scope according to the ideas of the present application. The changes and transformations shall all fall within the protection scope of the present disclosure. In summary, the content of this specification should not be construed as a limitation on the present disclosure.

**Claims**

1. A computing device comprising a main instruction processing unit, a main memory unit, and a main functional unit,

   wherein the main instruction processing unit is configured to, after receiving an input instruction, send a first control signal to the main memory unit and the main functional unit according to the input instruction;
   the main memory unit is configured to send input data to the main functional unit according to the first control signal, and the input data is represented in the form of a tensor; and
   the main functional unit is configured to decompose a winograd forward transformation of the input data into a summation operation according to the first control signal, and perform calculation to obtain a winograd forward transformation result of the input data;

wherein the main functional unit is configured to decompose the input data into a plurality of first sub-tensors according to the first control signal, wherein a count of the plurality of first sub-tensors is the same as a count of non-zero elements in the input data, one element in each of the plurality of first sub-tensors is the same as an element at a corresponding position in the input data, and other elements are 0,

perform the winograd forward transformation on the plurality of first sub-tensors, and sum winograd forward transformation results of the plurality of first sub-tensors to obtain the winograd forward transformation result of the input data, including

obtaining a winograd forward transformation result of a first meta-tensor corresponding to a first sub-tensor, where for the first meta-tensor corresponding to the first sub-tensor, a value of an element at a first position in the first meta-tensor is 1, the first position of the first meta-tensor is the same as a position of the non-zero elements in the first sub-tensor;

multiplying a non-zero element value in the first sub-tensor, as a coefficient, by the winograd forward transformation result of the first meta-tensor to obtain the winograd forward transformation result of the first sub-tensor;

and adding winograd forward transformation results of the plurality of first sub-tensors to obtain the winograd forward transformation result of the input data.

2. The computing device of claim 1, wherein the winograd forward transformation result of the first meta-tensor corresponding to the first sub-tensor is obtained in advance through the following process:
for each of the first sub-tensor, multiplying the left side of the first meta-tensor corresponding to the first sub-tensor by a forward transformation left-multiply matrix, and multiplying the right side of the first meta-tensor corresponding to the first sub-tensor by a forward transformation right-multiply matrix to obtain the winograd forward transformation result of the first meta-tensor.

3. The computing device of claim 1, wherein the main functional unit further includes a caching unit, and the main functional unit stores the winograd forward transformation result of the input data into the caching unit.

4. A computing device comprising a main instruction processing unit, a main functional unit, a secondary instruction processing unit, and a secondary functional unit,

wherein the secondary instruction processing unit is configured to receive a control signal sent by the main instruction processing unit, and send the control signal to the secondary functional unit; the secondary functional unit is configured to receive a winograd forward transformation result of input data sent by the main functional unit, wherein the winograd forward transformation result of the input data includes a winograd forward transformation result of an input neuron; and

wherein the secondary functional unit is configured to, according to the control signal, perform an element-wise multiplication on the winograd forward transformation result of the input neuron and a winograd forward transformation result of a weight to obtain an element-wise multiplication result, decompose a winograd backward transformation of the element-wise multiplication result into a summation operation, and perform calculation to obtain the winograd convolution result of the input data; wherein the secondary functional unit is configured to decompose the element-wise multiplication result into a plurality of second sub-tensors,

wherein winograd backward transformation results of the plurality of second sub-tensors are added to obtain a winograd backward transformation result of the input data whereas winograd forward transformation results of a plurality of first sub-tensors are added to obtain the winograd forward transformation result of the input data, wherein

a count of the plurality of second sub-tensors is the same as a count of non-zero elements in the element-wise multiplication result, and one element in each of the plurality of second sub-tensors is the same as an element at a corresponding position corresponding to the element-wise multiplication result, and other elements are 0;

perform the winograd backward transformation on the plurality of second sub-tensors, and sum winograd backward transformation results of the plurality of second sub-tensors to obtain the winograd convolution result of the input data, includingobtaining a winograd backward transformation result of a second meta-tensor corresponding to a second sub-tensor, wherein for the second meta-tensor corresponding to the second sub-tensor, the value of an element at a second position in the second meta-tensor is 1, the second position of the second meta-tensor is the same as a position of the non-zero elements in the second sub-tensor;

multiplying a non-zero element value in the second sub-tensor, as a coefficient, by the winograd backward transformation result of the second meta-tensor to obtain a winograd backward transformation result of the second sub-tensor; and

adding winograd backward transformation results of the plurality of second sub-tensors to obtain the winograd backward transformation result of the input data.

5. The computing device of claim 4, the winograd backward transformation result of the second meta-tensor corresponding to the second sub-tensor is obtained in advance through the following process:

for each of the second sub-tensor, multiplying the left side of the second meta-tensor corresponding to the second sub-tensor by a backward transformation left-multiply matrix, and

multiplying the right side of the second meta-tensor corresponding to the second sub-tensor by a backward transformation right-multiply matrix to obtain the winograd backward transformation result of the second meta-tensor.

6. The computing device of claim 4, wherein the computing device further includes a secondary memory unit, wherein

the secondary instruction processing unit is further configured to send the second control signal to the secondary memory unit; and

the secondary memory unit is configured to send the winograd forward transformation result of the weight to the secondary functional unit according to the second control signal.

7. The computing device of any one of claims 4 to 6, wherein the computing device further includes a main memory unit, and the secondary functional unit is further configured to send the winograd convolution result of the input data to the main memory unit.

8. An artificial intelligence chip comprising the computing device of any one of claims 1 to 7.

9. An electronic device comprising the artificial intelligence chip of claim 8.

**Patentansprüche**

1. Recheneinrichtung, umfassend eine Hauptbefehlsverarbeitungseinheit, eine Hauptspeichereinheit und eine Hauptfunktionseinheit,

wobei die Hauptbefehlsverarbeitungseinheit dazu konfiguriert ist, nach Empfangen eines Eingabebefehls ein erstes Steuersignal an die Hauptspeichereinheit und die Hauptfunktionseinheit gemäß dem Eingabebefehl zu senden;

die Hauptspeichereinheit dazu konfiguriert ist, Eingabedaten an die Hauptfunktionseinheit gemäß dem ersten Steuersignal zu senden, und die Eingabedaten in der Form eines Tensors dargestellt sind; und

die Hauptfunktionseinheit dazu konfiguriert ist, eine Winograd-Vorwärtstransformation der Eingabedaten gemäß dem ersten Steuersignal in eine Summationsoperation zu zerlegen und eine Berechnung durchzuführen, um ein Winograd-Vorwärtstransformationsergebnis der Eingabedaten zu erhalten;

wobei die Hauptfunktionseinheit konfiguriert ist zum Zerlegen der Eingabedaten gemäß dem ersten Steuersignal in eine Vielzahl von ersten Sub-Tensoren, wobei eine Anzahl der Vielzahl von ersten Sub-Tensoren die gleiche wie eine Anzahl von Nicht-Null-Elementen in den Eingabedaten ist, ein Element in jedem aus der Vielzahl von ersten Sub-Tensoren das gleiche wie ein Element an einer entsprechenden Position in den Eingabedaten ist und andere Elemente 0 sind,

Durchführen der Winograd-Vorwärtstransformation an der Vielzahl von ersten Sub-Tensoren und Summieren der Winograd-Vorwärtstransformationsergebnisse der Vielzahl von ersten Sub-Tensoren, um das Winograd-Vorwärtstransformationsergebnis der Eingabedaten zu erhalten, beinhaltend

Erhalten eines Winograd-Vorwärtstransformationsergebnisses eines ersten Meta-Tensors, der einem ersten Sub-Tensor entspricht, wobei für den ersten Meta-Tensor, der dem ersten Sub-Tensor entspricht, ein Wert eines Elements an einer ersten Position in dem ersten Meta-Tensor 1 ist, die erste Position des ersten Meta-Tensors die gleiche wie eine Position der Nicht-Null-Elemente in dem ersten Sub-Tensor ist;

Multiplizieren eines Nicht-Null-Elementwertes in dem ersten Sub-Tensor als einen Koeffizienten mit dem Winograd-Vorwärtstransformationsergebnis des ersten Meta-Tensors, um das Winograd-Vorwärtstransformationsergebnis des ersten Sub-Tensors zu erhalten;

und Addieren von Winograd-Vorwärtstransformationsergebnissen der Vielzahl von ersten Sub-Tensoren, um das Winograd-Vorwärtstransformationsergebnis der Eingabedaten zu erhalten.

2. Recheneinrichtung nach Anspruch 1, wobei das Winograd-Vorwärtstransformationsergebnis des ersten Meta-Tensors, der dem ersten Sub-Tensor entspricht, vorab durch den folgenden Vorgang erhalten wird: für jeden der ersten Sub-Tensoren, Multiplizieren der linken Seite des ersten Meta-Tensors, der dem ersten Sub-Tensor entspricht, mit einer Vorwärtstransformations-Linksmultiplikationsmatrix und Multiplizieren der rechten Seite des ersten Meta-Tensors, der dem ersten Sub-Tensor entspricht, mit einer Vorwärtstransformations-Rechtsmultiplikationsmatrix, um das Winograd-Vorwärtstransformationsergebnis des ersten Meta-Tensors zu erhalten.

3. Recheneinrichtung nach Anspruch 1, wobei die Hauptfunktionseinheit ferner eine Cache-Einheit beinhaltet und die Hauptfunktionseinheit das Winograd-Vorwärtstransformationsergebnis der Eingabedaten in die Cache-Einheit speichert.

4. Recheneinrichtung, umfassend eine Hauptbefehlsverarbeitungseinheit, eine Hauptfunktionseinheit, eine sekundäre Befehlsverarbeitungseinheit und eine sekundäre Funktionseinheit,

wobei die sekundäre Befehlsverarbeitungseinheit dazu konfiguriert ist, ein durch die Hauptbefehlsverarbeitungseinheit gesendetes Steuersignal zu empfangen und das Steuersignal an die sekundäre Funktionseinheit zu senden; die sekundäre Funktionseinheit dazu konfiguriert ist, ein Winograd-Vorwärtstransformationsergebnis von Eingabedaten, das durch die Hauptfunktionseinheit gesendet wird, zu empfangen, wobei das Winograd-Vorwärtstransformationsergebnis der Eingabedaten ein Winograd-Vorwärtstransformationsergebnis eines Eingabeneurons beinhaltet; und

wobei die sekundäre Funktionseinheit dazu konfiguriert ist, gemäß dem Steuersignal eine elementweise Multiplikation an dem Winograd-Vorwärtstransformationsergebnis des Eingabeneurons und einem Winograd-Vorwärtstransformationsergebnis eines Gewichts durchzuführen, um ein elementweises Multiplikationsergebnis zu erhalten, eine Winograd-Rückwärtstransformation des elementweisen Multiplikationsergebnisses in eine Summationsoperation zu zerlegen und eine Berechnung durchzuführen, um das Winograd-Faltungsergebnis der Eingabedaten zu erhalten; wobei die sekundäre Funktionseinheit konfiguriert ist zum Zerlegen des elementweise Multiplikationsergebnisses in eine Vielzahl von zweiten Sub-Tensoren,

wobei Winograd-Rückwärtstransformationsergebnisse der Vielzahl von zweiten Sub-Tensoren addiert werden, um ein Winograd-Rückwärtstransformationsergebnis der Eingabedaten zu erhalten, während Winograd-Vorwärtstransformationsergebnisse einer Vielzahl von ersten Sub-Tensoren addiert werden, um das Winograd-Vorwärtstransformationsergebnis der Eingabedaten zu erhalten, wobei eine Anzahl der Vielzahl von zweiten Sub-Tensoren die gleiche wie eine Anzahl von Nicht-Null-Elementen in dem elementweisen Multiplikationsergebnis ist und ein Element in jedem aus der Vielzahl von zweiten Sub-Tensoren das gleiche wie ein Element an einer entsprechenden Position ist, die dem elementweisen Multiplikationsergebnis entspricht, und andere Elemente 0 sind;

Durchführen der Winograd-Rückwärtstransformation an der Vielzahl von zweiten Sub-Tensoren und Summieren der Winograd-Rückwärtstransformationsergebnisse der Vielzahl von zweiten Sub-Tensoren, um das Winograd-Faltungsergebnis der Eingabedaten zu erhalten, beinhaltend Erhalten eines Winograd-Rückwärtstransformationsergebnisses eines zweiten Meta-Tensors, der einem zweiten Sub-Tensor entspricht, wobei für den zweiten Meta-Tensor, der dem zweiten Sub-Tensor entspricht, der Wert eines Elements an einer zweiten Position in dem zweiten Meta-Tensor 1 ist, die zweite Position des zweiten Meta-Tensors die gleiche wie eine Position der Nicht-Null-Elemente in dem zweiten Sub-Tensor ist;

Multiplizieren eines Nicht-Null-Elementwertes in dem zweiten Sub-Tensor als einen Koeffizienten mit dem Winograd-Rückwärtstransformationsergebnis des zweiten Meta-Tensors, um ein Winograd-Rückwärtstransformationsergebnis des zweiten Sub-Tensors zu erhalten; und

Addieren von Winograd-Rückwärtstransformationsergebnissen der Vielzahl von zweiten Sub-Tensoren, um das Winograd-Rückwärtstransformationsergebnis der Eingabedaten zu erhalten.

5. Recheneinrichtung nach Anspruch 4, wobei das Winograd-Rückwärtstransformationsergebnis des zweiten Meta-Tensors, der dem zweiten Sub-Tensor entspricht, vorab durch den folgenden Vorgang erhalten wird:

für jeden der zweiten Sub-Tensoren, Multiplizieren der linken Seite des zweiten Meta-Tensors, der dem zweiten Sub-Tensor entspricht, mit einer Rückwärtstransformations-Linksmultiplikationsmatrix und Multiplizieren der rechten Seite des zweiten Meta-Tensors, der dem zweiten Sub-Tensor entspricht, mit einer Rückwärtstransformations-Rechtsmultiplikationsmatrix, um das Winograd-Rückwärtstransformationsergebnis des zweiten Meta-Tensors zu erhalten.

6. Recheneinrichtung nach Anspruch 4, wobei die Recheneinrichtung ferner eine sekundäre Speichereinheit beinhaltet, wobei

die sekundäre Befehlsverarbeitungseinheit ferner dazu konfiguriert ist, das zweite Steuersignal an die sekundäre Speichereinheit zu senden; und
die sekundäre Speichereinheit dazu konfiguriert ist, das Winograd-Vorwärtstransformationsergebnis des Gewichts gemäß dem zweiten Steuersignal an die sekundäre Funktionseinheit zu senden.

7. Recheneinrichtung nach einem der Ansprüche 4 bis 6, wobei die Recheneinrichtung ferner eine Hauptspeichereinheit beinhaltet und die sekundäre Funktionseinheit ferner dazu konfiguriert ist, das Winograd-Faltungsergebnis der Eingabedaten an die Hauptspeichereinheit zu senden.

8. Chip mit künstlicher Intelligenz, umfassend die Recheneinrichtung nach einem der Ansprüche 1 bis 7.

9. Elektronische Einrichtung, umfassend den Chip mit künstlicher Intelligenz nach Anspruch 8.

**Revendications**

1. Dispositif informatique comprenant une unité de traitement d'instruction principale, une unité de mémoire principale et une unité fonctionnelle principale,

dans lequel l'unité de traitement d'instruction principale est configurée pour, après avoir reçu une instruction d'entrée, envoyer un premier signal de commande à l'unité de mémoire principale et à l'unité fonctionnelle principale selon l'instruction d'entrée ;
l'unité de mémoire principale est configurée pour envoyer des données d'entrée à l'unité fonctionnelle principale selon le premier signal de commande, et les données d'entrée sont représentées sous la forme d'un tenseur ; et
l'unité fonctionnelle principale est configurée pour décomposer une transformation directe de Winograd des données d'entrée en une opération de somme selon le premier signal de commande, et réaliser un calcul pour obtenir un résultat de transformation directe de Winograd des données d'entrée ;
dans lequel l'unité fonctionnelle principale est configurée pour décomposer les données d'entrée en une pluralité de premiers sous-tenseurs selon le premier signal de commande, dans lequel un compte de la pluralité de premiers sous-tenseurs est le même qu'un compte d'éléments non nuls dans les données d'entrée, un élément dans chacun de la pluralité de premiers sous-tenseurs est le même qu'un élément à une position correspondante dans les données d'entrée, et d'autres éléments sont 0,
réaliser la transformation directe de Winograd sur la pluralité de premiers sous-tenseurs, et faire la somme de résultats de transformation directe de Winograd de la pluralité de premiers sous-tenseurs pour obtenir le résultat de transformation directe de Winograd des données d'entrée, comprenant
l'obtention d'un résultat de transformation directe de Winograd d'un premier méta-tenseur correspondant à un premier sous-tenseur, où pour le premier méta-tenseur correspondant au premier sous-tenseur, une valeur d'un élément à une première position dans le premier méta-tenseur est 1, la première position du premier méta-tenseur est la même qu'une position des éléments non nuls dans le premier sous-tenseur ;
la multiplication d'une valeur d'élément non nul dans le premier sous-tenseur, en tant que coefficient, par le résultat de transformation directe de Winograd du premier méta-tenseur pour obtenir le résultat de transformation directe de Winograd du premier sous-tenseur ;
et l'addition de résultats de transformation directe de Winograd de la pluralité de premiers sous-tenseurs pour obtenir le résultat de transformation directe de Winograd des données d'entrée.

2. Dispositif informatique de la revendication 1, dans lequel le résultat de transformation directe de Winograd du premier méta-tenseur correspondant au premier sous-tenseur est obtenu à l'avance au travers du processus suivant :
pour chacun du premier sous-tenseur, la multiplication du côté gauche du premier méta-tenseur correspondant au premier sous-tenseur par une matrice de transformation directe multiple à gauche, et la multiplication du côté droit du premier méta-tenseur correspondant au premier sous-tenseur par une matrice de transformation directe multiple à droite pour obtenir le résultat de transformation directe de Winograd du premier méta-tenseur.

3. Dispositif informatique de la revendication 1, dans lequel l'unité fonctionnelle principale comprend en outre une unité de mise en cache, et l'unité fonctionnelle principale stocke le résultat de transformation directe de Winograd des données d'entrée dans l'unité de mise en cache.

4. Dispositif informatique comprenant une unité de traitement d'instruction principale, une unité fonctionnelle principale, une unité de traitement d'instruction secondaire et une unité fonctionnelle secondaire,

dans lequel l'unité de traitement d'instruction secondaire est configurée pour recevoir un signal de commande envoyé par l'unité de traitement d'instruction principale, et envoyer le signal de commande à l'unité fonctionnelle secondaire ; l'unité fonctionnelle secondaire est configurée pour recevoir un résultat de transformation directe de Winograd de données d'entrée envoyé par l'unité fonctionnelle principale, dans lequel le résultat de transformation directe de Winograd des données d'entrée comprend un résultat de transformation directe de Winograd d'un neurone d'entrée ; et

dans lequel l'unité fonctionnelle secondaire est configurée pour, en fonction du signal de commande, réaliser une multiplication par éléments sur le résultat de transformation directe de Winograd du neurone d'entrée et un résultat de transformation directe de Winograd d'un poids pour obtenir un résultat de multiplication par éléments, décomposer une transformation inverse de Winograd du résultat de multiplication par éléments en une opération de somme, et réaliser un calcul pour obtenir le résultat de convolution de Winograd des données d'entrée ; dans lequel l'unité fonctionnelle secondaire est configurée pour décomposer le résultat de multiplication par éléments en une pluralité de seconds sous-tenseurs,

dans lequel des résultats de transformation inverse de Winograd de la pluralité de seconds sous-tenseurs sont additionnés pour obtenir un résultat de transformation inverse de Winograd des données d'entrée, tandis que des résultats de transformation directe de Winograd d'une pluralité de premiers sous-tenseurs sont additionnés pour obtenir le résultat de transformation directe de Winograd des données d'entrée, dans lequel

un compte de la pluralité de seconds sous-tenseurs est le même qu'un compte d'éléments non nuls dans le résultat de multiplication par éléments, et un élément dans chacun de la pluralité de seconds sous-tenseurs est le même qu'un élément à une position correspondante correspondant au résultat de multiplication par éléments, et d'autres éléments sont 0 ;

réaliser la transformation inverse de Winograd sur la pluralité de seconds sous-tenseurs, et faire la somme des résultats de transformation inverse de Winograd de la pluralité de seconds sous-tenseurs pour obtenir le résultat de convolution de Winograd des données d'entrée, y compris l'obtention d'un résultat de transformation inverse de Winograd d'un second méta-tenseur correspondant à un second sous-tenseur, dans lequel pour le second méta-tenseur correspondant au second sous-tenseur, la valeur d'un élément à une seconde position dans le second méta-tenseur est 1, la seconde position du second méta-tenseur est la même qu'une position des éléments non nuls dans le second sous-tenseur ;

la multiplication d'une valeur d'élément non nul dans le second sous-tenseur, en tant que coefficient, par le résultat de transformation inverse de Winograd du second méta-tenseur pour obtenir un résultat de transformation inverse de Winograd du second sous-tenseur ; et

l'addition de résultats de transformation inverse de Winograd de la pluralité de seconds sous-tenseurs pour obtenir le résultat de transformation inverse de Winograd des données d'entrée.

5. Dispositif informatique de la revendication 4, le résultat de transformation inverse de Winograd du second méta-tenseur correspondant au second sous-tenseur est obtenu à l'avance au travers du processus suivant :

pour chacun du second sous-tenseur, la multiplication du côté gauche du second méta-tenseur correspondant au second sous-tenseur par une matrice de transformation inverse multiple à gauche, et

la multiplication du côté droit du second méta-tenseur correspondant au second sous-tenseur par une matrice de transformation inverse multiple à droite pour obtenir le résultat de transformation inverse de Winograd du second méta-tenseur.

6. Dispositif informatique de la revendication 4, dans lequel le dispositif informatique comprend en outre une unité de mémoire secondaire, dans lequel

l'unité de traitement d'instruction secondaire est en outre configurée pour envoyer le second signal de commande à l'unité de mémoire secondaire ; et

l'unité de mémoire secondaire est configurée pour envoyer le résultat de transformation directe de Winograd du poids à l'unité fonctionnelle secondaire selon le second signal de commande.

7. Dispositif informatique de l'une quelconque des revendications 4 à 6, dans lequel le dispositif informatique comprend en outre une unité de mémoire principale, et l'unité fonctionnelle secondaire est en outre configurée pour envoyer le résultat de convolution de Winograd des données d'entrée à l'unité de mémoire principale.

8. Puce d'intelligence artificielle comprenant le dispositif informatique de l'une quelconque des revendications 1 à 7.

9. Dispositif électronique, comprenant la puce d'intelligence artificielle de la revendication 8.

input instruction

FIG. 1

obtain a winograd forward transformation result of a first meta sub-tensor corresponding to a first sub-tensor — S21

multiply a non-zero element value in the first sub-tensor as a coefficient by the winograd forward transformation result corresponding to the first meta-tensor to obtain the winograd forward transformation result of the first sub-tensor — S22

add the winograd forward transformation result of the plurality of first sub-tensors to obtain the winograd forward transformation result of the input data — S23

FIG. 2

input instruction

computing device

| main memory unit | | main processing unit | | secondary memory unit | | secondary instruction processing unit |

main functional unit

| main processing unit | | caching unit |

secondary functional unit

| element-wise multiplication unit | | backward transformati on unit |

FIG. 3

S41

obtain a winograd forward transformation result of a second meta sub-tensor corresponding to a second sub-tensor

S42

multiply the non-zero element value in the second sub-tensor as a coefficient by the winograd backward transformation result corresponding to the second meta-tensor to obtain a winograd forward transformation result of the second sub-tenso

S43

add the winograd backward transformation results of the plurality of second sub-tensors to obtain the winograd backward transformation result of the input data

FIG. 4

FIG. 5

FIG. 6